(19) Europäisches Patentamt
European Patent Office
Office européen des brevets

(11) **EP 4 382 981 A2**

# (12) EUROPEAN PATENT APPLICATION

(43) Date of publication:
**12.06.2024 Bulletin 2024/24**

(21) Application number: **23210517.1**

(22) Date of filing: **17.11.2023**

(51) International Patent Classification (IPC):
**G02B 6/44** (2006.01)     **H04Q 11/00** (2006.01)

(52) Cooperative Patent Classification (CPC):
**G02B 6/4452; H04Q 11/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.11.2022 US 202217989194**

(71) Applicant: **Panduit Corp.**
**Tinley Park, IL 60487 (US)**

(72) Inventors:
• **Castro, Jose M.**
**Naperville (US)**
• **Pimpinella, Richard J.**
**Prairieville (US)**
• **Kose, Bulent**
**Burr Ridge (US)**
• **Huang, Yu**
**Orland Park (US)**

(74) Representative: **Roberts, Gwilym Vaughan**
**Kilburn & Strode LLP**
**Lacon London**
**84 Theobalds Road**
**London WC1X 8NL (GB)**

(54) **FABRIC NETWORK MODULES**

(57)     An apparatus is provided, the apparatus having a plurality of multifiber connector interfaces, wherein one or more of the multifiber connector interfaces are connectable to network equipment in a network using multifiber cables, the apparatus comprising an internal mesh implemented in two tiers, wherein the first tier is configured to rearrange and the second tier is configured to recombine individual fibers of different fiber groups of a respective multifiber connector, wherein the light path between transmitter and receiver multifiber connector interfaces is matched in order to provide optical connections from transmitting to receiving fibers. With this apparatus, complex arbitrary network topologies can be implemented with at least 1/N less point to point interconnections, where N=number of channels per multifiber connector interface.

**FIG. 13**

Illustrates the method for implementing two-tier FCN

EP 4 382 981 A2

**Description**

FIELD OF INVENTION

Disclosed is an apparatus and method to improve the scalability of Data Center networks using mesh network topologies, switches of various radixes, tiers, and oversubscription ratios. The disclosed apparatus and method reduce the number of manual network connections while simplifying the cabling installation, improving the flexibility and reliability of the data center.

BACKGROUND

The use of optical fiber for transmitting communication signals has been rapidly growing in importance due to its high bandwidth, low attenuation, and other distinct advantages, including radiation immunity, small size, and lightweight. Datacenter architectures using optical fiber are evolving to meet the global traffic demands and the increasing number of users and applications. The rise of cloud data centers, particularly the hyperscale cloud, has significantly changed the enterprise information technology (IT) business structure, network systems, and topologies. Moreover, cloud data center requirements are impacting technology roadmaps and standardization.

The wide adoption of server virtualization and advancements in data processing and storage technologies have produced the growth of East-West traffic within the data center. Traditional three-tier switch architectures comprising Core, Aggregation, and Access (CAA) layers cannot provide the low and equalized latency channels required for East-West traffic. Moreover, since the CAA architecture utilizes spanning tree protocol to disable redundant paths and build a loop-free topology, it underutilizes the network capacity.

The Folded Clos network (FCN) or Spine-and-Leaf architecture is a better-suited topology to overcome the limitation of the three-tier CAA networks. A Clos network is a multilevel circuit switching network introduced by Charles Clos in 1953. Initially, this network was devised to increase the capacity of crossbar switches. It became less relevant due to the development and adoption of Very Large Scale Integration (VLSI) techniques. The use of complex optical interconnect topologies initially for high-performance computing (HPC) and later for cloud data centers makes this architecture relevant again. The Folded-Clos network topology utilizes two types of switch nodes, Spine, and Leaf. Each Spine is connected to each Leaf. The network can scale horizontally to enable communication between a large number of servers, while minimizing the latency and non-uniformity by simply adding more Spine and Leaf switches.

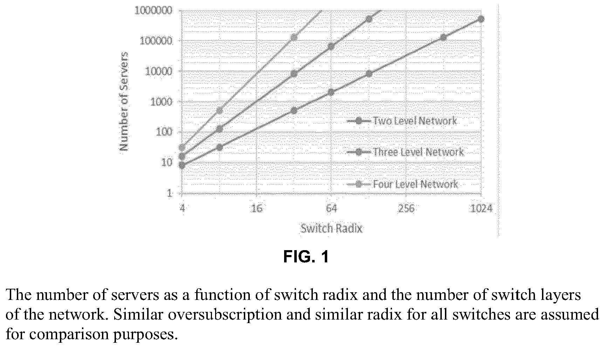

FCN depends on k, the switch radix, i.e., the ratio of Leaf switch server downlink compared to Spine switch uplink, and m, the number of tiers or layers of the network. The selection of (k,m) has a significant impact on the number of switches, the reliability and latency of the network, and the cost of deployment of the data center network. Fig 1 shows the relationship between the number of servers for different levels of oversubscription, assuming all switches have similar radix and total oversubscription 1:1.

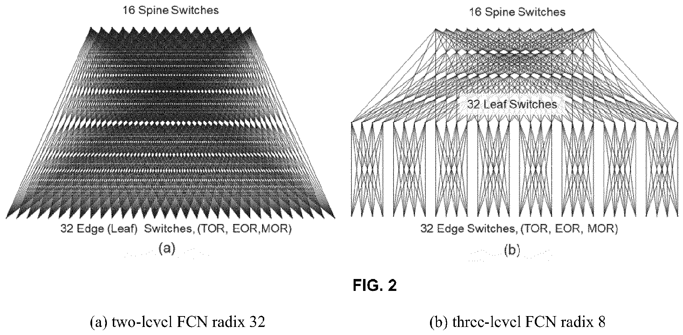

Fig 2 shows an example of two FCNs with a similar number of hosts, using different radixes and levels. The higher radix, 32 in this example, connects 32 edge switches in a two-layer network, as shown in part (a) of the figure. The two-level FCN provides the lowest latency at the cost of requiring a denser network (512 interconnections). By using a three-layer network, the interconnection layout simplifies (256 interconnections). However, more switches are needed, and more latency is introduced in the network. During the last years, the need for flatter networks to address the growing traffic among machines has favored the radix increase of the switches' application-specific integrated circuits (ASICs). Currently, ASICs can handle 256 radix switches at a speed of 100Gb/s per port. Those switches support 64x400GbE, 128x 200GbE, or 256×100GbE enabling flatter networks with at most three layers.

Based on industry telecommunications infrastructure Standard TIA-942-A, the locations of leaf and spine switches can be separated by tens or hundreds of meters. Typically, Spine switches are located in the main distribution area (MDA), whereas Leaf switches are located in the equipment distribution area (EDA) or horizontal distribution area (HDA).

This architecture has been proven to deliver high-bandwidth and low latency (only two hops to reach the destination), providing low oversubscription connectivity. However, for large numbers of switches, the Spine-Leaf architecture requires a complex mesh with large numbers of fibers and connectors, which increases the cost and complexity of the installation.

Future data centers will require more flexible and adaptable networks than the traditional mesh currently implemented to accommodate highly distributed computing, machine learning (ML) training loads, high levels of virtualization, and data replication.

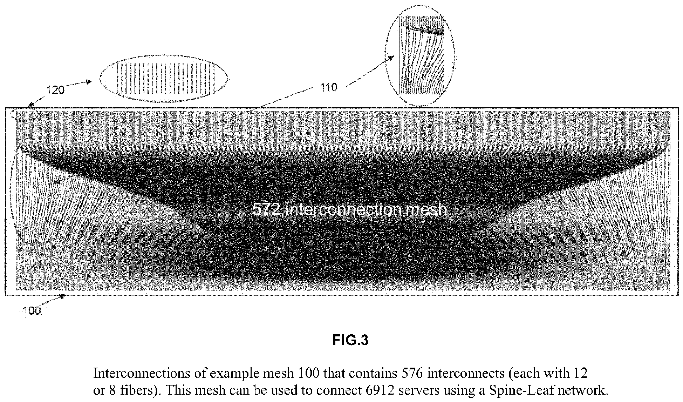

The deployment of new data centers or scaling of data center networks with several hundred or thousands of servers is not an easy task. A large number of interconnections from Spine to Leaf switches is needed, as shown in Fig 3. In this example, a fabric **100** can have 572 paths. Each line in the inset **120** can represent a group of eight or 12 fibers that are terminated in multifiber MPO connectors. The fibers can be ribbonized in the traditional flat or rollable ribbons. The inset **110** shows a zoom-in on a small area of the fabric **100.**

The interconnecting fabric similar to or larger than **100s** can be prone to errors which can be accentuated in many cases by challenging deployment deadlines or the lack of training of installers. Although the Spine-Leaf topology is resilient to misplaced connections, a large number of interconnection errors will produce a noticeable impact due to performance degradation resulting in the loss of some server links. Managing large-scale network configurations usually requires a dedicated crew to check the interconnections, which causes delays and increases the cost of the deployment.

Using transpose boxes, as shown in the prior art, can help to reduce installation errors. However, the prior art cannot be easily adapted to different network topologies, switches radixes, or oversubscription levels.

A new mesh method and apparatus that utilizes modular flexible, and better-organized interconnection mapping that can be quickly and reliably deployed in the data center is disclosed here.

In US 8621111, US 2012/0250679 A1, and US 2014/0025843 A1, a method of providing scalability in a data transmission network using a transpose box was disclosed. This box can connect the first tier and second tier of a network. This box facilitates the deployment of the network. However, a dedicated box for a selected network is required. As described in that application, the network topology dictates the type of transpose box to be used. Changes in the topology can require swapping the transpose boxes. Based on the description, a different box will be needed if the number of Spine or Leaf switches changes, the oversubscription, or other parameters of the network change.

Once the topology is selected, the application provides a method for scaling. This requires connecting the port of one box to another with a cable. This adds losses to the network and cannot efficiently accommodate the scaling of the network.

This approach disclosed in US 2014/0025843 A1, can work well for a large data center that has already selected the type of network architecture to be implemented and can prepare and maintain stock of different kinds of transpose boxes for its needs. A more flexible or modular approach is needed for a broader deployment of mesh networks in data centers.

In WO 2019/099771 A1, an interconnection box is disclosed. This application shows exemplary wiring to connect individual Spine and Leaf switches using a rack-mountable 1RU module. The ports of these modules are connected internally using internal multi-fiber cables that have a specific mesh incorporated. However, the module appears to be tuned to a particular topology, such as providing mesh among four spine and leaf switch ports. The application does not describe how the device can be used for topologies with a variable number of leaf or spine switches or with a variable number of ports.

In US 2015/0295655 A, an optical interconnection assembly that uses a plurality of leafside multiplexers and demultiplexers at each side of the network, one on the Spine side and another set near the Leaf is described. Each mux and demux is configured to work together in the desired topology. However, the application does not demonstrate the flexibility and scalability of this approach.

US 11269152 describes a method to circumvent the limitations of optical shuffle boxes, which according to the application, do not easily accommodate for reconfiguration or expansion of switch networks. The application describes apparatuses and methods for patching the network links using multiple distribution frames. At least two chassis are needed to connect switches from one to another layer of a network. Each chassis can accommodate a multiplicity of modules, e.g., cassettes arranged in a vertical configuration. The connection from a first-tier switch to one side of the modules is made using breakout cables. One side of the breakout cables is terminated in MPO (24 fibers) and the other in LC or other duplex connectors. One side of the modules has one or two MPO ports, and the other six duplex LC connectors or newer very-small form factor (VSFF) connectors.

Similarly, the second-tier switch is connected to modules in the other chassis. The patching needed to connect the switches is performed using a plurality of jumper assemblies configured to connect to the plurality of optical modules. The jumpers are specially designed to fix their relative positions since they must maintain the correct (linear) order. US 11269152 describes a method for patching, and it can make networks more scalable depending on the network radix. However, the network deployment is still challenging and susceptible to interconnection errors.

SUMMARY

An apparatus is provided, the apparatus having a plurality of multifiber connector interfaces, wherein one or more of the multifiber connector interfaces are connectable to network equipment in a network using multifiber cables, the apparatus comprising an internal mesh implemented in two tiers, wherein the first tier is configured to rearrange and the second tier is configured to recombine individual fibers of different fiber groups of a respective multifiber connector, wherein the light path between transmitter and receiver multifiber connector interfaces is matched in order to provide optical connections from transmitting to receiving fibers. With this apparatus, complex arbitrary network topologies can be implemented with at least 1/N less point to point interconnections, where N=number of channels per multifiber connector interface. Also, the fiber interconnection inside the apparatus can transmit signal at any wavelength utilized by transceivers, e.g., 850 nm-1600 nm. Due to the transparency of the fiber interconnection in the apparatus, the signals per wavelength can be assigned to propagate in one direction from transmitter to receiver or in a bidirectional way.

BRIEF DESCRIPTION OF THE DRAWINGS

Fig. 1 shows the number of servers as a function of switch radix and the number of switch layers of the network. Similar oversubscription and similar radix for all switches are assumed for comparison purposes.

Fig. 2 shows an example of two FCNs with a similar number of hosts, using different radixes and levels.

Fig. 3 shows interconnections of an example mesh that contains 576 interconnects (each with 12 or 8 fibers). This mesh can be used to connect 6912 servers using a Spine-Leaf network.

Fig. 4(a) shows a front view of the disclosed module 400.

Fig. 4(b) shows the rear view of module 400.

Fig. 5 shows a top view of module 400.

Fig. 6 shows the interconnections of module 400.

Fig. 7 shows the interconnection of region 480 of module 400.

Fig. 8 is a top view of submodule 500 showing interconnection arrangements.

Fig. 9 shows 16 possible configurations that can be implemented in a submodule 500.

Fig. 10 Illustrates a simple method for implementing networks with 16 Leaf Switches and up to 16 Spine switches, using the modules 400.

Fig. 11(a) shows an example of interconnections between Spine port and Modules 400

Fig. 1 1(b) shows an interconnection table for the example of Fig. 1 1(a).

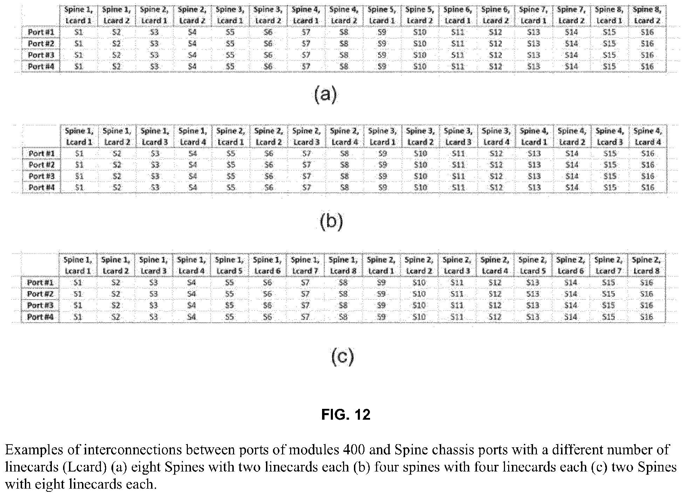

Fig. 12(a) shows an example of interconnections between ports of modules 400 and Spine chassis ports, with eight spines with two linecards each.

Fig. 12(b) shows an example of interconnections between ports of modules 400 and Spine chassis ports, with four spines with four linecards each.

Fig. 12(c) shows an example of interconnections between ports of modules 400 and Spine chassis ports, with two spines with eight linecards each.

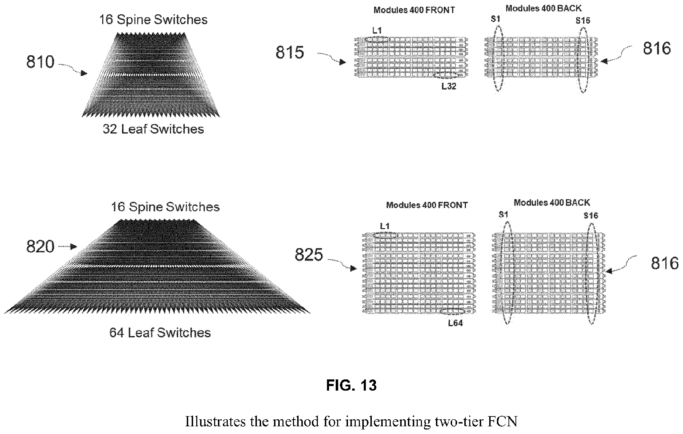

Fig. 13 illustrates the method for implementing two-tier FCN.

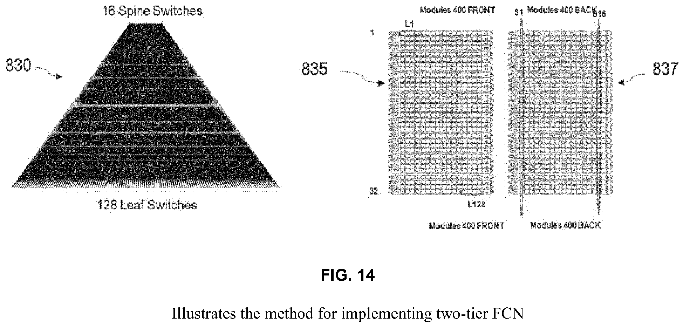

Fig. 14 illustrates the method for implementing two-tier FCN.

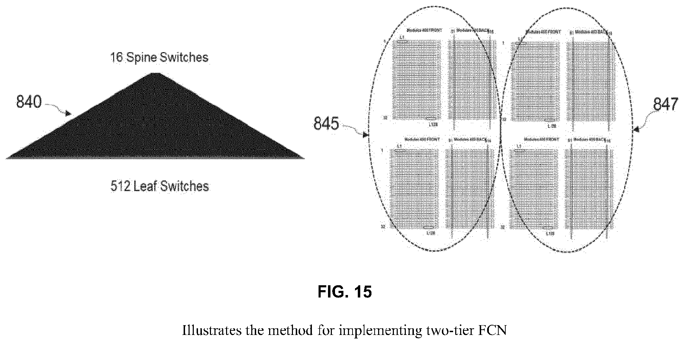

Fig. 15 illustrates the method for implementing two-tier FCN.

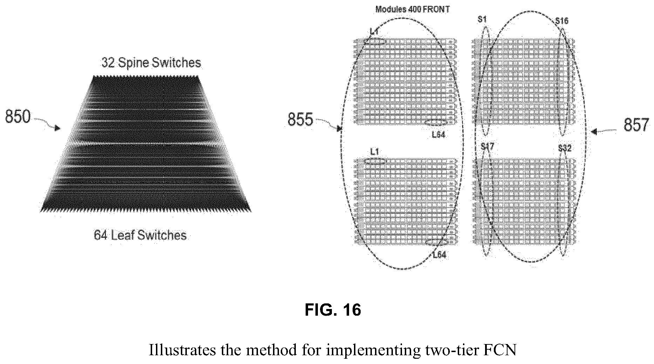

Fig. 16 illustrates the method for implementing two-tier FCN.

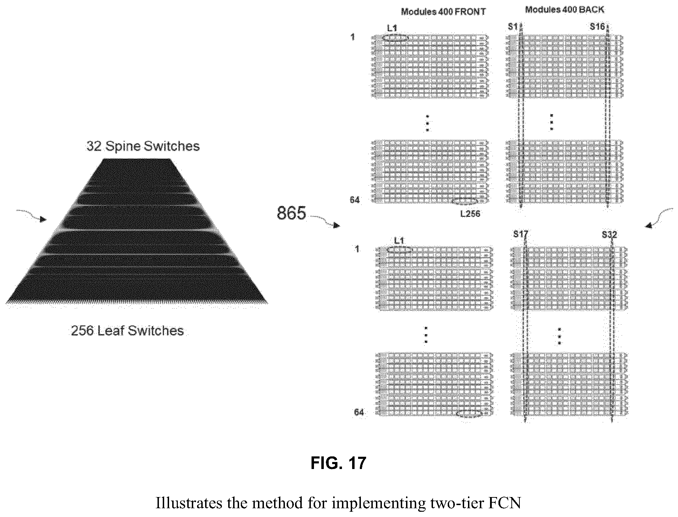

Fig. 17 illustrates the method for implementing two-tier FCN.

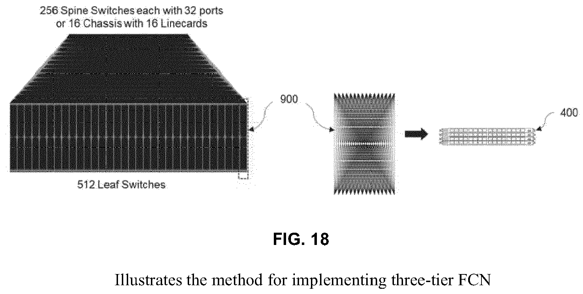

Fig. 18 illustrates the method for implementing three-tier FCN.

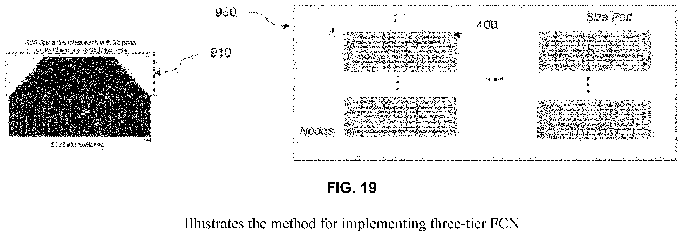

Fig. 19 illustrates the method for implementing three-tier FCN.

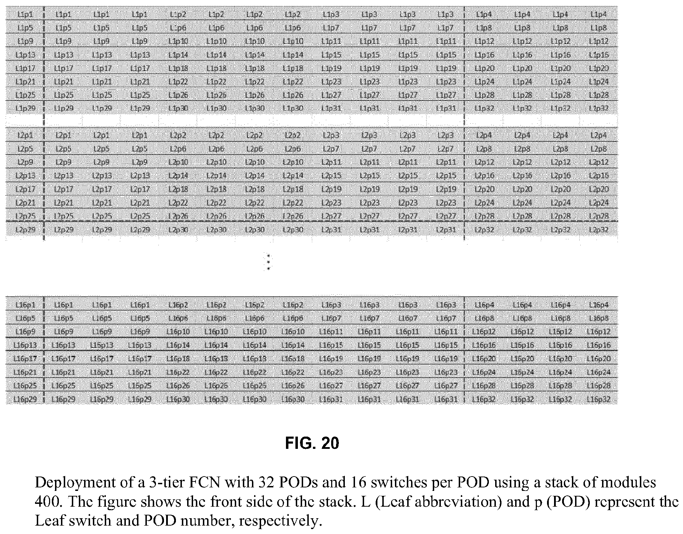

Fig. 20 illustrates deployment of a 3-tier FCN with 32 PODs and 16 switches per POD using a stack of modules 400. The figure shows the front side of the stack. L (Leaf abbreviation) and p (POD) represent the Leaf switch and POD number, respectively.

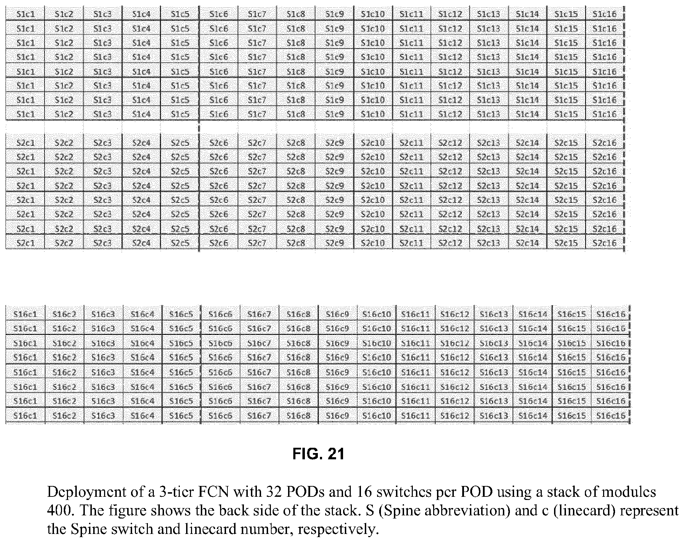

Fig. 21 illustrates deployment of a 3-tier FCN with 32 PODs and 16 switches per POD using a stack of modules 400. The figure shows the back side of the stack. S (Spine abbreviation) and c (linecard) represent the Spine switch and linecard number, respectively.

DESCRIPTION OF INVENTION

A modular apparatus and general method to deploy optical networks of a diversity of tiers and radixes are disclosed in this document. The module and method can be used with standalone, stacked, or chassis network switches, as long as the modular connections utilize MPO connectors with eight or more fibers. In particular, switches with Ethernet specified SR or DR transceivers in their ports, such as 40GBASE-SR4, 100GBASE-SR4, 200GBASE-SR4, or 400GBASE-DR4, can use these modules without any change in connectivity. Network with single-lane duplex transceivers (10G SR/LR, 25G SR/LR), 100GBASE-LR4, 400GBASE-LR4/FR4) will also work with these mesh modules, provided that correct TX/RX polarity is maintained in the mesh. Other types of transceivers, such as 400GBASE-FR4/LR4, can also be used by combining four transceiver ports with a harness or a breakout cassette.

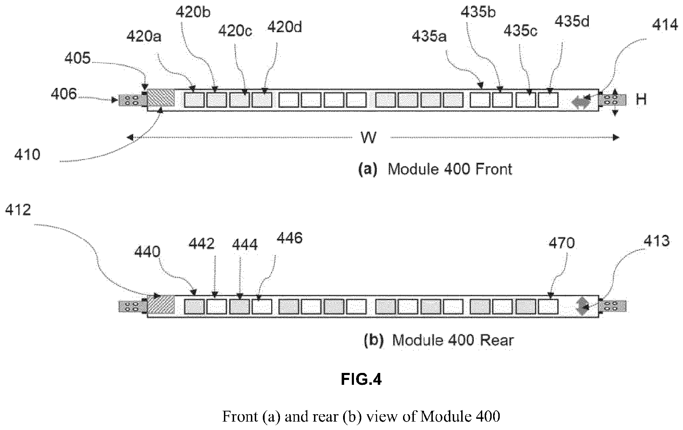

Fig. 4(a) shows a front view of the disclosed module **400,** which is the key element in facilitating optical network deployment, reshaping, and scaling. In this embodiment, the module has 32 MPO connector ports that can be divided into the front and rear sections, as shown in Fig. 4. Alternatively, the 32 ports could be located on one face of the device (not shown here).

For the sake of illustration, we assume that ports **420** to **435,** each with four MPO connectors, labeled a,b,c, and d, are located on the front side of the module, facing the Leaf switches, as shown in part (a) of the figure. On the other side of the module, ports **440** to **470** (opposite to the **420-435** ports), each representing one MPO connector, face the Spine switches connections. The MPO dimensions allow a module width, W, in the range of 12 inches up to 19 inches, and the height, H, is in the range of 0.4 to 0.64 inches. The small width of the 16 MPO connectors relative to rack width (19 inches) provides enough space to place machine-readable labels, **410, 412,** and visual labels **414, 413,** that can help deploy or check the network interconnection as described later in this application. Also, lateral rails, **405,** on both sides of the module, would enable the modules to be inserted into a chassis structure if required. Alternatively, using brackets **406,** the modules can be directly attached to the rack. By using the specified height range for this embodiment, up to four modules can be stacked in 1 RU or less than 1.5 RU depending on density requirements.

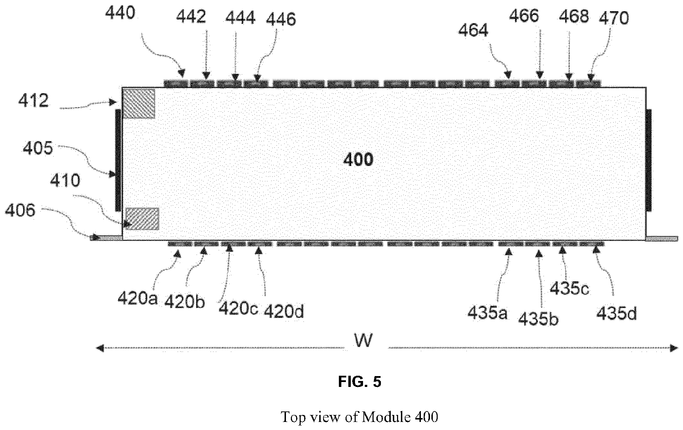

Fig. 5 shows a top view of the module, showing additional machine-readable labels **410** and **412.** A laser scanner or a camera can read the labels. The read code can link to a database that has the interconnection maps of all modules in the network. The information can be displayed on a portable device, tablet, phone, or augmented reality lens to facilitate the deployment. See RSs 16563 and 25512 for more specific information on this.

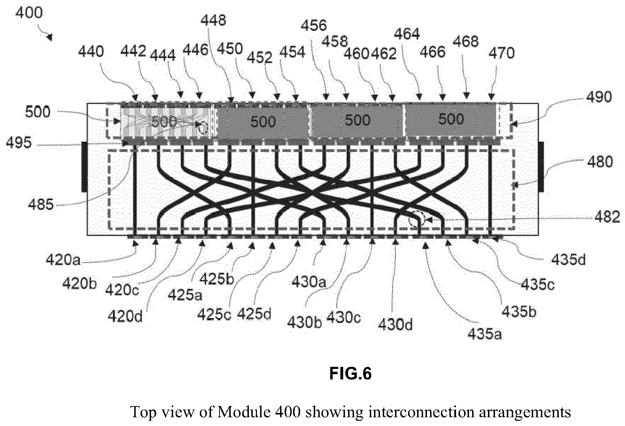

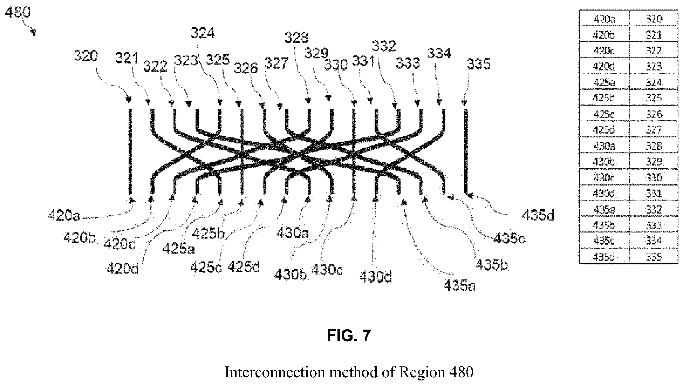

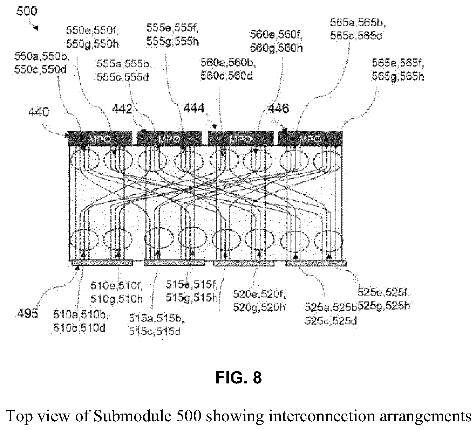

Fig. 6 shows the interconnection scheme of the modules according to the present invention. The interconnection configuration of all module ports is described in Tables I and II. To simplify the module structure, the mesh is divided into two regions, **480** and **490.** Region **480** re-orders groups of fibers, e.g., **482** is paired with **485,** which can be standard or rollable ribbons or just cable units of 8, 12, or 16 fibers. The connection method needed to simplify the connection of Leaf switches is described in Fig. 7. In region **490,** the mesh is implemented at the fiber level. For example, fibers **485** from the group of fibers **420a** and fibers **482** from group **435a,** mix with fibers from two other groups **425a** and **430a.** In this embodiment, four submodules, **500,** are used to produce the interconnection mesh of the four groups of fibers shown in this embodiment. Fig. 8 shows a connection diagram for one of the submodules **500.** In this figure, we show how the fibers in ports groups **510** to **525** are mixed with the other fibers from groups **515** and **520** coming from submodule **480.** On the opposite side, depending on the position of the submodule **500,** its outputs **550-565** can correspond to four module ports, e.g., **440-446.** Hence, an apparatus, according to the present invention, mixes the Ethernet physical media dependent (PMD) lanes with other transceiver PMD lanes in order to distribute the network data flow and help balance the data flow load to any one transceiver.

For an MPO transmitting four parallel channels, the mesh of submodule **500** can be implemented in a large permutation of arrangements. For a MPO connector with Nf=12 fibers, Nc=4 duplex channels, and Np=4 multifiber connector ports, the topological mapping from Inputs ports, $I_A$, and $I_B$ to outputs ports $O_A$ and $O_B$ described in the equations below preserve the correct paths from the transmitter to receivers.

$$\text{Input ports: } I_A = i + Nf \times (k-1), \ \ I_B = 1 - i + Nf \times k, \quad\quad\quad (1)$$

$$\text{Outputs ports: } O_A = p(i, r_1) + Nf \times (p(k, r_2) - 1), O_B = 1 - p(i, r_1) + Nf \times p(k, r_2), \quad (2)$$

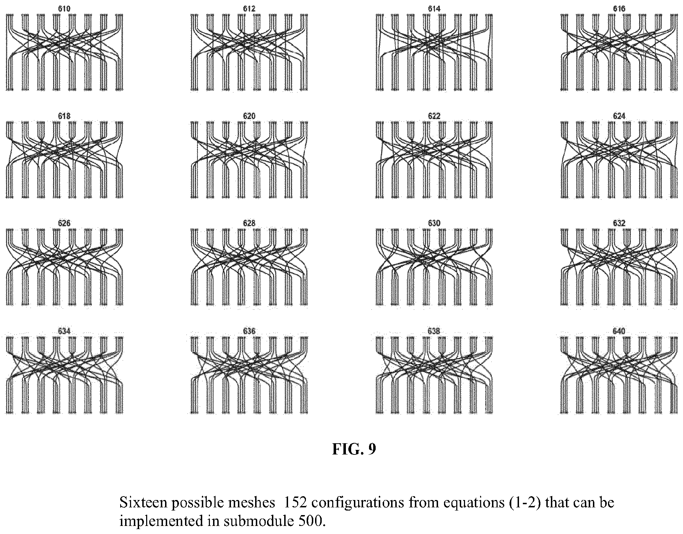

In (1) and (2), i is an index ranging from 1 to Nc, which relates to the input duplex ports of the connector, k is an index of the connector, ranging from 1 to Np and p(.,..) is a permutation function which has two input parameters, the first one, is the number to be permutated, and the second the permutation order in a list of Nc!=24 possible permutations. These sets of equations indicate that r1 and r2 determine the number of possible configurations; therefore, module **500** can have r1×r2 =576 connecting $I_A$ to $O_A$ and $I_B$ to $O_B$, and in total, 1152 possible configurations when crossing connections are used, e.g., $I_A$ to $O_B$. Sixteen configurations are shown in Fig. 9. And their interconnection arrangements are described in Table I enabling efficient use of connectivity methods, e.g., TIA 568.3 D Method A or Method B.

Table I Mesh configuration table of sixteen possible arrangements, **610** to **640** of submodule **500**

| | 610 | 612 | 614 | 616 | 618 | 620 | 622 | 624 | 626 | 628 | 630 | 632 | 634 | 636 | 638 | 640 |
|---|---|---|---|---|---|---|---|---|---|---|---|---|---|---|---|---|
| **510a** | 550a | 550a | 550a | 565d | 565b | 565d | 565c | 565a | 550h | 550h | 550h | 565e | 565g | 565e | 565f | 565h |
| **510b** | 555b | 555b | 560d | 560d | 560b | 560d | 560c | 560a | 555g | 555g | 560e | 560e | 560g | 560e | 560f | 560h |
| **510c** | 560c | 560c | 550b | 555d | 555b | 555d | 555c | 555a | 560f | 560f | 550g | 555e | 555g | 555e | 555f | 555h |
| **510d** | 565d | 565d | 565d | 550d | 550b | 550d | 550c | 550a | 565e | 565e | 565e | 550e | 550g | 550e | 550f | 550h |
| **510e** | 565e | 565e | 565e | 550e | 550g | 550e | 550f | 550h | 565d | 565d | 565d | 550d | 550b | 550d | 550c | 550a |
| **510f** | 560f | 560f | 550g | 555e | 555g | 555e | 555f | 555h | 560c | 560c | 550b | 555d | 555b | 555d | 555c | 555a |
| **510g** | 555g | 555g | 560e | 560e | 560g | 560e | 560f | 560h | 555b | 555b | 560d | 560d | 560b | 560d | 560c | 560a |
| **510h** | 550h | 550h | 550h | 565e | 565g | 565e | 565f | 565h | 550a | 550a | 550a | 565d | 565b | 565d | 565c | 565a |
| **515a** | 555a | 555a | 555a | 565c | 565a | 565b | 565d | 565c | 555h | 555h | 555h | 565f | 565h | 565g | 565e | 565f |
| **515b** | 550b | 550b | 560b | 560c | 560a | 560b | 560d | 560c | 550g | 550g | 560g | 560f | 560h | 560g | 560e | 560f |
| **515c** | 560b | 560b | 555b | 555c | 555a | 555b | 555d | 555c | 560g | 560g | 555g | 555f | 555h | 555g | 555e | 555f |
| **515d** | 565b | 565b | 565b | 550e | 550a | 550b | 550d | 550c | 565g | 565g | 565g | 550f | 550h | 550g | 550e | 550f |
| **515e** | 565g | 565g | 565g | 550f | 550h | 550g | 550e | 550f | 565b | 565b | 565b | 550e | 550a | 550b | 550d | 550c |
| **515f** | 560g | 560g | 555g | 555f | 555h | 555g | 555e | 555f | 560b | 560b | 555b | 555c | 555a | 555b | 555d | 555c |
| **515g** | 550g | 550g | 560g | 560f | 560h | 560g | 560e | 560f | 550b | 550b | 560b | 560c | 560a | 560b | 560d | 560c |
| **515h** | 555h | 555h | 555h | 565f | 565h | 565g | 565e | 565f | 555a | 555a | 555a | 565c | 565a | 565b | 565d | 565c |
| **520a** | 560a | 560a | 560a | 565b | 565c | 565a | 565b | 565d | 560h | 560h | 560h | 565g | 565f | 565h | 565g | 565e |
| **520b** | 550c | 565c | 560c | 560b | 560c | 560a | 560b | 560d | 550f | 565f | 560f | 560g | 560f | 560h | 560g | 560e |
| **520c** | 555c | 555c | 555c | 555b | 555c | 555a | 555b | 555d | 555f | 555f | 555f | 555g | 555f | 555h | 555g | 555e |
| **520d** | 565c | 550e | 550c | 550b | 550c | 550a | 550b | 550d | 565f | 550f | 550f | 550g | 550f | 550h | 550g | 550e |
| **520e** | 565f | 550f | 550f | 550g | 550f | 550h | 550g | 550e | 565c | 550e | 550c | 550b | 550c | 550a | 550b | 550d |
| **520f** | 555f | 555f | 555f | 555g | 555f | 555h | 555g | 555e | 555c | 555c | 555c | 555b | 555c | 555a | 555b | 555d |
| **520g** | 550f | 565f | 560f | 560g | 560f | 560h | 560g | 560e | 550c | 565c | 560e | 560b | 560c | 560a | 560b | 560d |
| **520h** | 560h | 560h | 560h | 565g | 565f | 565h | 565g | 565e | 560a | 560a | 560a | 565b | 565c | 565a | 565b | 565d |
| **525a** | 565a | 565a | 565a | 565a | 565d | 565c | 565a | 565b | 565h | 565h | 565h | 565h | 565e | 565f | 565h | 565g |

EP 4 382 981 A2

(continued)

| | 610 | 612 | 614 | 616 | 618 | 620 | 622 | 624 | 626 | 628 | 630 | 632 | 634 | 636 | 638 | 640 |
|---|---|---|---|---|---|---|---|---|---|---|---|---|---|---|---|---|
| **525b** | 560d | 560d | 565c | 560a | 560d | 560c | 560a | 560b | 560e | 560e | 565f | 560h | 560e | 560f | 560h | 560g |
| **525e** | 555d | 555d | 555d | 555a | 555d | 555c | 555a | 555b | 555e | 555e | 555e | 555h | 555e | 555f | 555h | 555g |
| **525d** | 550d | 550d | 550d | 550a | 550d | 550c | 550a | 550b | 550e | 550e | 550e | 550h | 550e | 550f | 550h | 550g |
| **525e** | 550e | 550e | 550e | 550h | 550e | 550f | 550h | 550g | 550d | 550d | 550d | 550a | 550d | 550c | 550a | 550b |
| **525f** | 555e | 555e | 555e | 555h | 555e | 555f | 555h | 555g | 555d | 555d | 555d | 555a | 555d | 555c | 555a | 555b |
| **525g** | 560e | 560e | 565f | 560h | 560e | 560f | 560h | 560g | 560d | 560d | 565c | 560a | 560d | 560c | 560a | 560b |
| **525h** | 565h | 565h | 565h | 565h | 565e | 565f | 565h | 565g | 565a | 565a | 565a | 565a | 565d | 565c | 565a | 565b |

Table II Mesh configuration of module **400**

| 440 | 442 | 444 | 446 | 448 | 450 | 452 | 454 | 456 | 458 | 460 | 462 | 464 | 466 | 468 | 470 |
|---|---|---|---|---|---|---|---|---|---|---|---|---|---|---|---|
| 420a | 420a | 420a | 420a | 420b | 420b | 420b | 420b | 420c | 420c | 420c | 420c | 420d | 420d | 420d | 420d |
| 425a | 425a | 425a | 425a | 425b | 425b | 425b | 425b | 425c | 425c | 425c | 425c | 425d | 425d | 425d | 425d |
| 430a | 430a | 430a | 430a | 430b | 430b | 430b | 430b | 430c | 430c | 430c | 430c | 430d | 430d | 430d | 430d |
| 435a | 435a | 435a | 435a | 435b | 435b | 435b | 435b | 435c | 435c | 435c | 435c | 435d | 435d | 435d | 435d |

The two-step mesh incorporated in each module **400,** by combining sections **480** and **490,** increases the degree of mixing of the fiber channels inside each module. This simplifies the deployment of the network since a significant part of the network complexity is moved from the structured cabling fabric to one or more modules **400.** The fibers of the regions **480** and **490** are brought together by **495,** which represents a connector or a splice. Note that at this joint point, the fiber arrays from region 4**80** can be flipped to accommodate for different interconnection methods, e.g., TIA 568.3 D Method A or Method B. Using module **400** and following simple rules to connect a group of uplinks or downlinks horizontally or vertically the installation becomes cleaner, and cable management is highly improved as it will be shown in the following description of this application.

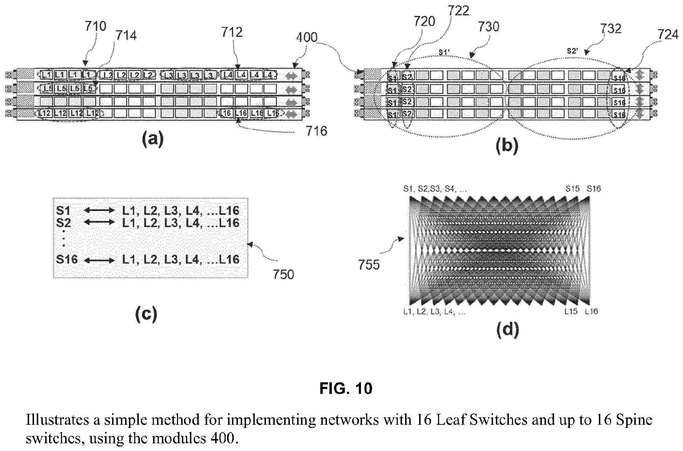

A group of N modules **400** can enable diverse configuration of radixes, with various numbers of Spine and Leaf switches. For example, Fig. 10 shows a stack of four modules **400.** Part (a) of the figure shows the module side that is connected to the Leaf switches. For simplicity, we label this as the front side. Part (b) shows the opposite side of the same module **400,** the backside, which is connected to the Spine switches.

The diagrams in Fig. 10 assume that sixteen Leaf switches, each with four MPO uplinks, need to be connected to the fabric shown in part (d) of the figure. In this illustrative example, the uplinks of the Leaf switches are connected horizontally in groups of four until the last port of each module **400** is used. For example, **710** and **712,** the first and the last fourth ports of the first module **400** connect to the uplink ports of the Leaf switches L1 and L4, respectively. The uplinks of the fifth Leaf switch populate ports **714** of the second module **400.** This method continues until the uplinks of the last Leaf switch are connected to the ports **716.**

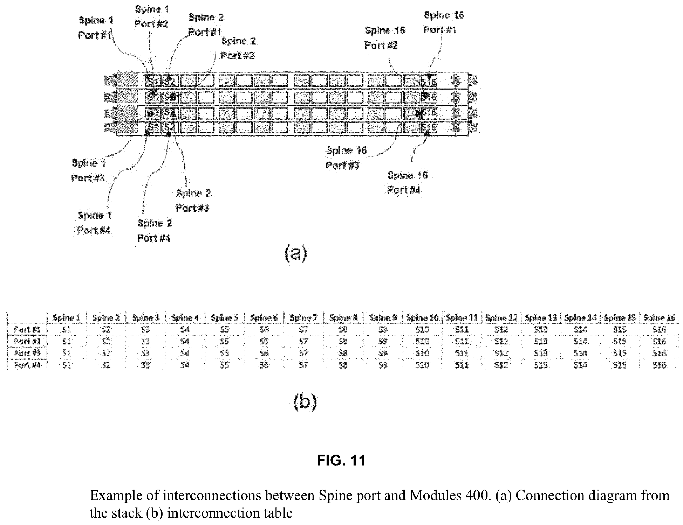

The Spines ports are assigned at the backside of the stacked modules **400.** For example, if standalone Spine switches are used, **720, 722,** and **724** correspond to ports of the first, second, and sixteenth Spine switch, respectively, labeled as S1, S2, and S16 in Fig. 10. A more detailed description of the connections from the module to the Spines is shown in Fig. 11.

Alternatively, the Spines can be implemented using chassis switches. Although more expensive than standalone systems, chassis switches can provide several advantages such as scalability, reliability, and performance, among others. The port connectivity of the Spines using chassis switches can follow various arrangements. For example, using eight Spine switches, with two linecards each, all S1 and S2 ports can connect to the first Spine, S3 and S4 to the second Spine, and S15 and S16 ports to the last Spine. Using four Spine switches with four linecards each, all S1, S2, S3, and S4 ports can connect to the first Spine, S5, S6, S7, S8 to the second Spine, and S13, S14, S15, S16 to the last Spine. If only two Spine switches with eight linecards each are used, all the ports S1,S2, S3 to S8 will connect to the first Spine (S1' in Fig. 9), and S9 to S16 ports will connect to the second Spine (S2'). A more detailed description of the connections from module to Spine is shown in tables (a), (b), and (c) in Fig. 12.

In many cases, e.g., when using chassis switches with many linecards, the number of Spine switches could be less than 16. In those cases, several ports can be grouped to populate the Spine switches. For example, **730** groups 32 ports to connect to a Spine S1' and the other 32 ports labeled as **732** connect to a second spine (S2'). By using modules **400** and the described method, each Spine switch interconnects with all the Leaf switches as shown in equations in inset **750** of Fig. 10. A representation of the mesh shown in **755,** can be verified by following the connectivity tables from Fig. 7, Table I and II. In general, module **400,** reduces the complexity of scaling up or scaling up or even de-scaling the network, as it is shown. The interconnection inside the apparatus can transmit signal at any wavelength from 830 nm-1650 nm. Moreover, the signals assigned to each wavelength can propagate in one direction from transmitter to receiver or in a bidirectional way.

EXAMPLES OF NETWORK DEPLOYMENT OF NETWORKS USING MODULES 400

The examples in figures 13 to 17 show the implementation of two-tier and three-tier FCNs of various radixes, oversubscription, and sizes using modules **400.** A detailed description of the number of modules needed for each network and an estimation of the rack space required for the modules is shown in Tables III to VI.

Starting with two-tier FCNs, Fig. 13 shows two fabrics, **810** and **820,** each with 16 Spine Switches. Fabric **810,**

EP 4 382 981 A2

shown in the figure, can be implemented using four modules **400.** The connection map module **400** stack is shown from both sides of the module, one labeled front, **815,** and the one labeled back, **817.** The **815** side connects to 32 Leaf switches with four MPO uplinks with assigned eight fibers for duplex connections. The switches are labeled *Li*, where *i* is the index of the switch. For this example, i is in the range of 1 to 16. As shown in the figure on the **815** side, the Leaf switches connect horizontally. All L1 uplinks are connected adjacently in the first four ports of the first module **400.** All L32 uplinks are connected to the last four ports of the eighth module **400.** From the side **816,** the backside of the same module stack, 16 Spine switches connects vertically, as shown in the figure. Based on the disclosed dimensions of module **400,** this fabric can be implemented in less than 3 RU.

Fabric **820,** which has 64 Leaf switches with four MPO uplinks, can be implemented using four modules **400.** The connection method is similar to the one described above. From the **825** side, all Leave switches uplinks are connected adjacently following a consistent method. For example, L1 is connected to the first four ports of the first module **400.** All L64 uplinks are connected to the last four ports of the sixteenth module **400.** From the side 826, the backside of the same module stack, 16 Spine switches connects vertically, as shown in the figure. Based on the disclosed dimensions of module **400,** this fabric can be implemented in less than 5 RU.

The networks in Figures 14 and 15 have the same number of spine switches but a much larger number of Leaf switches. The implementation procedure is similar. For **830,** L1 is connected to the first four ports of the first module **400,** and the L64 uplinks are connected to the last four ports of the thirty-second module **400.** The Spine switches are connected vertically, as mentioned above. The network shown in **850** requires 128 modules, and due to the large number of ports, the Spines need to be implemented with chassis with 16 linecards.

The fabrics described below have Leaf switches with radix 32, which means they have 16 uplinks (4 MPOs) and 16 downlinks (4 MPOs). Fig. 16 shows a network using Leaf Switches with radix 64, 8 MPOs for uplinks, and 8 MPOs for downlinks.

Implementing this network produce lower oversubscription ratios, e.g., 1:1, at the cost of more complexity. Modules **400** can also be used to simplify the installation. As shown in Fig. 16, 16 modules are used to connect to 64 Leaf switches. The uplinks of all the Leaf switches are divided into two groups of 4 MPO each. There is no need for any special order or procedure for this separation. Each group is installed exactly as shown in Fig. 13 for network **820.** This means using 16 modules **400,** the first group of 4 MPO uplinks per each Leaf mesh with the first 16 Spines (1S to 16S). The second group of uplinks connects to the spines S17 to S32, as shown in the figure. Using this method, the network can be scaled to a couple of thousand Leaf servers. Fig. 17 illustrate the implementation for a network with 256 Leaf switches.

| # Spine Swtchs | Radix Spine | # Leaf Switches | Radix Leaf | Leaf downLks | # Servers | Ovscr | # Mesh Modules | Rack Size for Modules, (RU) | # Racks for modules | Ports Spine (MPO) | #LineCards |
|---|---|---|---|---|---|---|---|---|---|---|---|
| 16 | 16 | 16 | 32 | 48 | 768 | 3:1 | 4 | 2 | 1 | 4 | 1 |
| 16 | 32 | 32 | 32 | 48 | 1536 | 3:1 | 8 | 3 | 1 | 8 | 1 |
| 16 | 48 | 48 | 32 | 48 | 2304 | 3:1 | 12 | 5 | 1 | 12 | 1 |
| 16 | 64 | 64 | 32 | 48 | 3072 | 3:1 | 16 | 6 | 1 | 16 | 1 |
| 16 | 72 | 72 | 32 | 48 | 3456 | 3:1 | 18 | 7 | 1 | 18 | 1 |
| 16 | 96 | 96 | 32 | 48 | 4608 | 3:1 | 24 | 9 | 1 | 24 | 1 |
| 16 | 128 | 128 | 32 | 48 | 6144 | 3:1 | 32 | 12 | 1 | 32 | 1 |
| 16 | 192 | 192 | 32 | 48 | 9216 | 3:1 | 48 | 17 | 1 | 48 | 2 |
| 16 | 256 | 256 | 32 | 48 | 12288 | 3:1 | 64 | 23 | 1 | 64 | 2 |
| 16 | 384 | 384 | 32 | 48 | 18432 | 3:1 | 96 | 34 | 1 | 96 | 3 |
| 16 | 512 | 512 | 32 | 48 | 24576 | 3:1 | 128 | 45 | 2 | 128 | 4 |
| 16 | 768 | 768 | 32 | 48 | 36864 | 3:1 | 192 | 68 | 2 | 192 | 6 |
| 16 | 1024 | 1024 | 32 | 48 | 49152 | 3:1 | 256 | 90 | 3 | 256 | 8 |
| 16 | 1536 | 1536 | 32 | 48 | 73728 | 3:1 | 384 | 135 | 4 | 384 | 12 |
| 16 | 2048 | 2048 | 32 | 48 | 98304 | 3:1 | 512 | 180 | 5 | 512 | 16 |

Table III, Parameters for two-layer FCN with oversubscription 3:1 with 16 Spine switches. For the number of switches and servers, the required number of modules **400**, and its size in rack units are shown.

| # Spine Swtchs | Radix Spine | # Leaf Switches | Radix Leaf | Leaf downLks | # Servers | Ovscr | # Mesh Modules | Rack Size for Modules, (RU) | # Racks for modules | Ports Spine (MPO) | #LineCards | Chassis Swtch\? | #In ecti |
|---|---|---|---|---|---|---|---|---|---|---|---|---|---|
| 32 | 32 | 32 | 64 | 32 | 1024 | 1:1 | 16 | 6 | 1 | 8 | 1 | No | |
| 32 | 64 | 64 | 64 | 32 | 2048 | 1:1 | 32 | 12 | 1 | 16 | 1 | No | |
| 32 | 128 | 128 | 64 | 32 | 4096 | 1:1 | 64 | 23 | 1 | 32 | 1 | No | |
| 32 | 192 | 192 | 64 | 32 | 6144 | 1:1 | 96 | 34 | 1 | 48 | 2 | Yes | |
| 32 | 256 | 256 | 64 | 32 | 8192 | 1:1 | 128 | 45 | 2 | 64 | 2 | Yes | |
| 32 | 384 | 384 | 64 | 32 | 12288 | 1:1 | 192 | 68 | 2 | 96 | 3 | Yes | |
| 32 | 512 | 512 | 64 | 32 | 16384 | 1:1 | 256 | 90 | 3 | 128 | 4 | Yes | |
| 32 | 768 | 768 | 64 | 32 | 24576 | 1:1 | 384 | 135 | 4 | 192 | 6 | Yes | |
| 32 | 1024 | 1024 | 64 | 32 | 32768 | 1:1 | 512 | 180 | 5 | 256 | 8 | Yes | |
| 32 | 1536 | 1536 | 64 | 32 | 49152 | 1:1 | 768 | 269 | 7 | 384 | 12 | Yes | |
| 32 | 2048 | 2048 | 64 | 32 | 65536 | 1:1 | 1024 | 359 | 9 | 512 | 16 | Yes | 1 |

Table IV, Parameters for two-layer FCN with oversubscription 1:1 for 32 Spine switches. For the number of switches and servers, the required number of modules **400,** and its size in rack units are shown.

As shown in Tables III and IV, using two-layer networks, the network can be scaled to support thousands of Leaf switches that can interconnect 10s of thousands of servers. A method to scale beyond that number requires using a three-layer FCN. Fig 1(b) shows a topology of a three-layer network with 16 Spine and 32 Leaf switches. In a three-layer network, the Spines do not need to be connected to all Leaf switches but to a group of them called PODs.

Module **400** can also be used to implement three-layer FCNs, as shown in Fig. 18, 19, and 20. In Fig. 18, a three-layer network with 256 Spine and 512 Leaf switches is shown. Each POD of the network, **900,** has sixteen Fabric and Leaf switches. Each POD's mesh can be fully implemented with four stacked modules **400,** as it was shown previously (see Fig. 10(d). Since there are 32 PODs, **900,** 128 modules **400** are needed to implement the first section of this network (Fabric Switch to Leaf Switch).

In Fig. 18, the second layer Spine to Leaf switches is implemented using modules **400.** Since each Spine switch needs to connect only to one Leaf switch in the POD, there are 32x256 =8192 ports that can be arranged in 512 modules **400,** as shown in Fig. 19. The interconnection method for the Leaf and Spine switches is shown in Fig. 20 and 21, respectively. Clearly, due to rack space constraints, the stack of modules needs to be installed in several racks. Following the method described above, the uplinks of the Leaf switches in each POD populate the modules horizontally. For example, four MPO uplinks of the first Leaf switch from POD 1, which are L1p1, L1p1, L1p1, and L1p1, occupy the first MPO ports of the first module 400. Four MPO uplinks of the Leaf switch 16 from POD 32, which are L16p32, L16p32, L16p32, and L16p32, occupy the last four MPO ports of the last module **400** in the stack. From the opposite side of the stack, the columns of the module stack connect to the linecard MPO ports of the Spine switches. For example, as shown in Fig. 20, the linecard MPO ports of the Spine switch 1, S1c1, connect to eight MPO ports of the first column of the stack. The MPO ports of the second linecard of the same switch, S1c2, connect to eight MPO ports of the second column of the stack. The MPO ports of the 16th linecard of the last Spine Switch, S16c16, connect to eight ports of the last column of the stack.

This three-layer fabric, with 256 Spine (or 16 chassis with 16 linecards) and 512 Leaf switches, requires 256 modules **400** with equivalent rack space equal to or smaller than 90 RU. The method to scale this network, with an oversubscription of 3:1 and 1:1 and the required number of modules **400** and rack space, is shown in Tables V and VI.

In general, modules **400** and the disclosed method of interconnection for two and three-tier FCNs simplify the deployment of the optical networks of different sizes and configurations. The risk of interconnection errors during the deployment is highly reduced since the groups of cables representing uplinks/downlinks for the same switches are connected in close proximity, and also due to the high degree of mesh in the networks. For example, in Fig. 19, all L$ip_j$ connections, where $i$ is the Leaf uplink index ranging from 1 to 4 and $j$ the POD index ranging from 1 to 32, are interchangeable. During the network deployment, an unplanned change from L1p1 to L1p2, L1p1 to L1p3, L1p1to L1p4, or in general any combination inside that group, will not have an impact on the network operation. The topology will still connect all the Leaf switches from the PODs to the Spine switches with the same number of paths and identical allocated bandwidth. Similarly, in Fig. 20, all the Spines are interchangeable for any row, as can be derived from Fig. 9 part c. The level of redundancy provided by the stack of modules **400** highly reduces the risk of fabric failures or performance degradation caused by errors in the interconnection.

| # Spine Swtchs | Radix Spine | # Leaf Switches | Radix Leaf | Leaf downLks | # Servers | Ovscr | # PODS | #Switch per POD | # Mesh Modules | Rack Size for Modules, (RU) | # Racks for modules | Ports Spine (MPO) | #LineCards |
|---|---|---|---|---|---|---|---|---|---|---|---|---|---|
| 256 | 32 | 512 | 32 | 48 | 24576 | 3:1 | 32 | 16 | 256 | 90 | 3 | 8 | 1 |
| 256 | 64 | 1024 | 32 | 48 | 49152 | 3:1 | 64 | 16 | 512 | 180 | 5 | 16 | 1 |
| 256 | 96 | 1536 | 32 | 48 | 73728 | 3:1 | 96 | 16 | 768 | 269 | 7 | 24 | 1 |
| 256 | 128 | 2048 | 32 | 48 | 98304 | 3:1 | 128 | 16 | 1024 | 359 | 9 | 32 | 1 |
| 256 | 192 | 3072 | 32 | 48 | 147456 | 3:1 | 192 | 16 | 1536 | 538 | 13 | 48 | 2 |
| 256 | 256 | 4096 | 32 | 48 | 196608 | 3:1 | 256 | 16 | 2048 | 717 | 18 | 64 | 2 |
| 256 | 512 | 8192 | 32 | 48 | 393216 | 3:1 | 512 | 16 | 4096 | 1434 | 35 | 128 | 4 |
| 256 | 768 | 12288 | 32 | 48 | 589824 | 3:1 | 768 | 16 | 6144 | 2151 | 52 | 192 | 6 |
| 256 | 1024 | 16384 | 32 | 48 | 786432 | 3:1 | 1024 | 16 | 8192 | 2868 | 69 | 256 | 8 |
| 256 | 1536 | 24576 | 32 | 48 | 1179648 | 3:1 | 1536 | 16 | 12288 | 4301 | 103 | 384 | 12 |
| 256 | 2048 | 32768 | 32 | 48 | 1572864 | 3:1 | 2048 | 16 | 16384 | 5735 | 137 | 512 | 16 |

Table V Parameters for three-layer FCNs with oversubscription 1:3 for 256 Spine switches (16 Chassis with 16 line cards). For the number of switches and servers, the required number of modules 400, and its size in rack units are shown.

| # Spine Swtchs | Radix Spine | # Leaf Switches | Radix Leaf | Leaf downLks | # Servers | Ovscr | # PODS | #Switch per POD | # Mesh Modules | Rack Size for Modules, | # Racks for modules | Ports Spine (MPO) | #LineCards | Chassis Swtch\? | #Interconnection fiber | #Interconnection MPO | Pe | Pe_mod |
|---|---|---|---|---|---|---|---|---|---|---|---|---|---|---|---|---|---|---|
| 1024 | 64 | 2048 | 64 | 32 | 65536 | 1:1 | 64 | 32 | 2048 | 717 | 18 | 16 | 1 | No | 262144 | 32768 | 7.3% | 72.1% |
| 1024 | 96 | 3072 | 64 | 32 | 98304 | 1:1 | 96 | 32 | 3072 | 1076 | 26 | 24 | 1 | No | 393216 | 49152 | 2.0% | 61.2% |
| 1024 | 128 | 4096 | 64 | 32 | 131072 | 1:1 | 128 | 32 | 4096 | 1434 | 35 | 32 | 1 | No | 524288 | 65536 | 0.5% | 51.9% |
| 1024 | 192 | 6144 | 64 | 32 | 196608 | 1:1 | 192 | 32 | 6144 | 2151 | 52 | 48 | 2 | Yes | 786432 | 98304 | 0.0% | 37.4% |
| 1024 | 256 | 8192 | 64 | 32 | 262144 | 1:1 | 256 | 32 | 8192 | 2868 | 69 | 64 | 2 | Yes | 1048576 | 131072 | 0.0% | 27.0% |
| 1024 | 384 | 12288 | 64 | 32 | 393216 | 1:1 | 384 | 32 | 12288 | 4301 | 103 | 96 | 3 | Yes | 1572864 | 196608 | 0.0% | 14.0% |
| 1024 | 512 | 16384 | 64 | 32 | 524288 | 1:1 | 512 | 32 | 16384 | 5735 | 137 | 123 | 4 | Yes | 2097152 | 262144 | 0.0% | 7.3% |
| 1024 | 640 | 20480 | 64 | 32 | 655360 | 1:1 | 640 | 32 | 20480 | 7168 | 171 | 160 | 5 | Yes | 2621440 | 327680 | 0.0% | 3.8% |
| 1024 | 768 | 24576 | 64 | 32 | 786432 | 1:1 | 768 | 32 | 24576 | 8602 | 205 | 192 | 6 | Yes | 3145728 | 393216 | 0.0% | 2.0% |
| 1024 | 896 | 28672 | 64 | 32 | 917504 | 1:1 | 896 | 32 | 28672 | 10036 | 239 | 224 | 7 | Yes | 3670016 | 458752 | 0.0% | 1.0% |
| 1024 | 1024 | 32768 | 64 | 32 | 1048576 | 1:1 | 1024 | 32 | 32768 | 11469 | 274 | 255 | 8 | Yes | 4194304 | 524288 | 0.0% | 0.5% |
| 1024 | 1280 | 40960 | 64 | 32 | 1310720 | 1:1 | 1280 | 32 | 40960 | 14335 | 342 | 320 | 10 | Yes | 5242880 | 655360 | 0.0% | 0.1% |
| 1024 | 1408 | 45056 | 64 | 32 | 1441792 | 1:1 | 1408 | 32 | 45056 | 15770 | 376 | 352 | 11 | Yes | 5767168 | 720896 | 0.0% | 0.1% |
| 1024 | 1536 | 49152 | 64 | 32 | 1572864 | 1:1 | 1536 | 32 | 49152 | 17204 | 410 | 384 | 12 | Yes | 6291456 | 786432 | 0.0% | 0.0% |
| 1024 | 1664 | 53248 | 64 | 32 | 1703936 | 1:1 | 1664 | 32 | 53248 | 18637 | 444 | 415 | 13 | Yes | 6815744 | 851968 | 0.0% | 0.0% |
| 1024 | 1792 | 57344 | 64 | 32 | 1835008 | 1:1 | 1792 | 32 | 57344 | 20071 | 478 | 448 | 14 | Yes | 7340032 | 917504 | 0.0% | 0.0% |
| 1024 | 1920 | 61440 | 64 | 32 | 1966080 | 1:1 | 1920 | 32 | 61440 | 21504 | 512 | 480 | 15 | Yes | 7864320 | 983040 | 0.0% | 0.0% |
| 1024 | 2048 | 65536 | 64 | 32 | 2097152 | 1:1 | 2048 | 32 | 65536 | 22938 | 547 | 512 | 16 | Yes | 8388608 | 1048576 | 0.0% | 0.0% |

Table VI Parameters for three-layer FCNs with oversubscription 1:1 for 1024 Spine switches (64 chassis with 16 Line cards). For the number of switches and servers, the required number of modules 400, and its size in rack units are shown.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An apparatus having a plurality of multifiber connector interfaces, wherein one or more of the multifiber connector interfaces are connectable to network equipment in a network using multifiber cables, the apparatus comprising an internal mesh implemented in two tiers,

wherein the first tier is configured to rearrange and the second tier is configured to recombine individual fibers of different fiber groups of a respective multifiber connector,
wherein the light path between transmitter and receiver multifiber connector interfaces is matched in order to provide optical connections from transmitting to receiving fibers.

2. The apparatus of claim 1, wherein complex arbitrary network topologies are implemented with at least 1/N less point to point interconnections, where N=number of channels per multifiber connector interface.

3. The apparatus of any preceding claim, wherein the apparatus is further configured to be stacked to provide two-tier or three-tier CLOS network topology of various spine and leaf switch radixes.

4. The apparatus of any preceding claim, wherein the apparatus is further configured to enable networks with different levels of oversubscription from 1:1 to 1:12.

5. The apparatus of any preceding claim, wherein at least one of:

the apparatus is further configured to be used to scale optical networks from eight to a hundred thousand switches;
the apparatus is further configured to provide redundant paths for reducing the risk of network failure due to interconnection errors; or
the apparatus is further configured to have a small form factor that enables stacking of three modules in one RU and/or that allows the stacking of up to 132 modules per rack.

6. The apparatus of any preceding claim, further comprising one or more external labels providing interconnection maps of the network to a portable device comprising a label reader when the external labels are read by said label reader, optionally wherein the label reader is a laser scanner or camera.

7. The apparatus of any preceding claim, wherein the apparatus is further configured to distribute the traffic load of the switches efficiently.

8. The apparatus of any preceding claim, wherein at least one of:

the interconnection ports use multifiber connectors with 4 to 32 fibers; or
the interconnection ports use multifiber connectors of different form factors, such as CS, SN, MPO, SN-MT, MMC.

9. The apparatus of any preceding claim, wherein each fiber interconnection is configured to transmit signals of different wavelengths in a co-propagation and counter propagation (bidirectional) way.

10. A structured cabling system comprising a stack of fiber optic modules, wherein each module is an apparatus according to any preceding claim.

11. An apparatus comprising a plurality of optical connector adapters and interconnecting optical fiber cables between said connector adapters, wherein said optical fiber cables are configured to implement a network interconnection fabric between uplink switch port adapters and downlink switch port adapters for implementing a network switching optical cabling interconnection function within said apparatus.

12. The apparatus of claim 11, wherein the apparatus is further configured to have an oversubscription of 1:1, 1:2, or 3:1.

13. A module box configured to connect optical channels from switches or servers of a network, wherein at least one structure of a fabric complexity is implemented in each module box, wherein each module box has an internal configuration that shuffles input or output groups of cables as well as individual single or duplex fiber channels inside each cable of the groups of cables.

14. The module box of claim 13, wherein the internal configuration optimizes the combination of the optical channels of the fabric complexity.

15. The module box of claim 13 or 14, wherein each fiber channel can transmit signal of different wavelengths in a co-propagation and counter propagation (bidirectional) way.

**FIG. 1**

The number of servers as a function of switch radix and the number of switch layers of the network. Similar oversubscription and similar radix for all switches are assumed for comparison purposes.

16 Spine Switches

32 Edge (Leaf) Switches, (TOR, EOR,MOR)

(a)

16 Spine Switches

32 Leaf Switches

32 Edge Switches, (TOR, EOR, MOR)

(b)

**FIG. 2**

(a) two-level FCN radix 32

(b) three-level FCN radix 8

**FIG.3**

Interconnections of example mesh 100 that contains 576 interconnects (each with 12
or 8 fibers). This mesh can be used to connect 6912 servers using a Spine-Leaf network.

**(a)** Module 400 Front

**(b)** Module 400 Rear

**FIG.4**

Front (a) and rear (b) view of Module 400

**FIG. 5**

Top view of Module 400

**FIG.6**

Top view of Module 400 showing interconnection arrangements

**FIG. 7**

Interconnection method of Region 480

| | |
|---|---|
| 420a | 320 |
| 420b | 321 |
| 420c | 322 |
| 420d | 323 |
| 425a | 324 |
| 425b | 325 |
| 425c | 326 |
| 425d | 327 |
| 430a | 328 |
| 430b | 329 |
| 430c | 330 |
| 430d | 331 |
| 435a | 332 |
| 435b | 333 |
| 435c | 334 |
| 435d | 335 |

**FIG. 8**

Top view of Submodule 500 showing interconnection arrangements

**FIG. 9**

Sixteen possible meshes 152 configurations from equations (1-2) that can be implemented in submodule 500.

**FIG. 10**

Illustrates a simple method for implementing networks with 16 Leaf Switches and up to 16 Spine switches, using the modules 400.

(a)

| | Spine 1 | Spine 2 | Spine 3 | Spine 4 | Spine 5 | Spine 6 | Spine 7 | Spine 8 | Spine 9 | Spine 10 | Spine 11 | Spine 12 | Spine 13 | Spine 14 | Spine 15 | Spine 16 |
|---|---|---|---|---|---|---|---|---|---|---|---|---|---|---|---|---|
| Port #1 | S1 | S2 | S3 | S4 | S5 | S6 | S7 | S8 | S9 | S10 | S11 | S12 | S13 | S14 | S15 | S16 |
| Port #2 | S1 | S2 | S3 | S4 | S5 | S6 | S7 | S8 | S9 | S10 | S11 | S12 | S13 | S14 | S15 | S16 |
| Port #3 | S1 | S2 | S3 | S4 | S5 | S6 | S7 | S8 | S9 | S10 | S11 | S12 | S13 | S14 | S15 | S16 |
| Port #4 | S1 | S2 | S3 | S4 | S5 | S6 | S7 | S8 | S9 | S10 | S11 | S12 | S13 | S14 | S15 | S16 |

(b)

**FIG. 11**

Example of interconnections between Spine port and Modules 400. (a) Connection diagram from the stack (b) interconnection table

|  | Spine 1, Lcard 1 | Spine 1, Lcard 2 | Spine 2, Lcard 1 | Spine 2, Lcard 2 | Spine 3, Lcard 1 | Spine 3, Lcard 2 | Spine 4, Lcard 1 | Spine 4, Lcard 2 | Spine 5, Lcard 1 | Spine 5, Lcard 2 | Spine 6, Lcard 1 | Spine 6, Lcard 2 | Spine 7, Lcard 1 | Spine 7, Lcard 2 | Spine 8, Lcard 1 | Spine 8, Lcard 2 |
|---|---|---|---|---|---|---|---|---|---|---|---|---|---|---|---|---|
| Port #1 | S1 | S2 | S3 | S4 | S5 | S6 | S7 | S8 | S9 | S10 | S11 | S12 | S13 | S14 | S15 | S16 |
| Port #2 | S1 | S2 | S3 | S4 | S5 | S6 | S7 | S8 | S9 | S10 | S11 | S12 | S13 | S14 | S15 | S16 |
| Port #3 | S1 | S2 | S3 | S4 | S5 | S6 | S7 | S8 | S9 | S10 | S11 | S12 | S13 | S14 | S15 | S16 |
| Port #4 | S1 | S2 | S3 | S4 | S5 | S6 | S7 | S8 | S9 | S10 | S11 | S12 | S13 | S14 | S15 | S16 |

(a)

|  | Spine 1, Lcard 1 | Spine 1, Lcard 2 | Spine 1, Lcard 3 | Spine 1, Lcard 4 | Spine 2, Lcard 1 | Spine 2, Lcard 2 | Spine 2, Lcard 3 | Spine 2, Lcard 4 | Spine 3, Lcard 1 | Spine 3, Lcard 2 | Spine 3, Lcard 3 | Spine 3, Lcard 4 | Spine 4, Lcard 1 | Spine 4, Lcard 2 | Spine 4, Lcard 3 | Spine 4, Lcard 4 |
|---|---|---|---|---|---|---|---|---|---|---|---|---|---|---|---|---|
| Port #1 | S1 | S2 | S3 | S4 | S5 | S6 | S7 | S8 | S9 | S10 | S11 | S12 | S13 | S14 | S15 | S16 |
| Port #2 | S1 | S2 | S3 | S4 | S5 | S6 | S7 | S8 | S9 | S10 | S11 | S12 | S13 | S14 | S15 | S16 |
| Port #3 | S1 | S2 | S3 | S4 | S5 | S6 | S7 | S8 | S9 | S10 | S11 | S12 | S13 | S14 | S15 | S16 |
| Port #4 | S1 | S2 | S3 | S4 | S5 | S6 | S7 | S8 | S9 | S10 | S11 | S12 | S13 | S14 | S15 | S16 |

(b)

|  | Spine 1, Lcard 1 | Spine 1, Lcard 2 | Spine 1, Lcard 3 | Spine 1, Lcard 4 | Spine 1, Lcard 5 | Spine 1, Lcard 6 | Spine 1, Lcard 7 | Spine 1, Lcard 8 | Spine 2, Lcard 1 | Spine 2, Lcard 2 | Spine 2, Lcard 3 | Spine 2, Lcard 4 | Spine 2, Lcard 5 | Spine 2, Lcard 6 | Spine 2, Lcard 7 | Spine 2, Lcard 8 |
|---|---|---|---|---|---|---|---|---|---|---|---|---|---|---|---|---|
| Port #1 | S1 | S2 | S3 | S4 | S5 | S6 | S7 | S8 | S9 | S10 | S11 | S12 | S13 | S14 | S15 | S16 |
| Port #2 | S1 | S2 | S3 | S4 | S5 | S6 | S7 | S8 | S9 | S10 | S11 | S12 | S13 | S14 | S15 | S16 |
| Port #3 | S1 | S2 | S3 | S4 | S5 | S6 | S7 | S8 | S9 | S10 | S11 | S12 | S13 | S14 | S15 | S16 |
| Port #4 | S1 | S2 | S3 | S4 | S5 | S6 | S7 | S8 | S9 | S10 | S11 | S12 | S13 | S14 | S15 | S16 |

(c)

**FIG. 12**

Examples of interconnections between ports of modules 400 and Spine chassis ports with a different number of linecards (Lcard) (a) eight Spines with two linecards each (b) four spines with four linecards each (c) two Spines with eight linecards each.

16 Spine Switches

810

32 Leaf Switches

815

Modules 400 FRONT     Modules 400 BACK
                        S1              S16
L1

                                              816

L32

16 Spine Switches

820

64 Leaf Switches

825

Modules 400 FRONT     Modules 400 BACK
                        S1              S16
L1

                                              816

L64

**FIG. 13**

Illustrates the method for implementing two-tier FCN

830

16 Spine Switches

128 Leaf Switches

835

Modules 400 FRONT    S1 Modules 400 BACK S16

L1

1

32

L128

Modules 400 FRONT    Modules 400 BACK

837

**FIG. 14**

Illustrates the method for implementing two-tier FCN

**FIG. 15**

Illustrates the method for implementing two-tier FCN

**FIG. 16**

Illustrates the method for implementing two-tier FCN

**FIG. 17**

Illustrates the method for implementing two-tier FCN

256 Spine Switches each with 32 ports
or 16 Chassis with 16 Linecards

900

400

512 Leaf Switches

**FIG. 18**

Illustrates the method for implementing three-tier FCN

**FIG. 19**

Illustrates the method for implementing three-tier FCN

**FIG. 20**

Deployment of a 3-tier FCN with 32 PODs and 16 switches per POD using a stack of modules 400. The figure shows the front side of the stack. L (Leaf abbreviation) and p (POD) represent the Leaf switch and POD number, respectively.

| S1c1 | S1c2 | S1c3 | S1c4 | S1c5 | S1c6 | S1c7 | S1c8 | S1c9 | S1c10 | S1c11 | S1c12 | S1c13 | S1c14 | S1c15 | S1c16 |
|------|------|------|------|------|------|------|------|------|-------|-------|-------|-------|-------|-------|-------|
| S1c1 | S1c2 | S1c3 | S1c4 | S1c5 | S1c6 | S1c7 | S1c8 | S1c9 | S1c10 | S1c11 | S1c12 | S1c13 | S1c14 | S1c15 | S1c16 |
| S1c1 | S1c2 | S1c3 | S1c4 | S1c5 | S1c6 | S1c7 | S1c8 | S1c9 | S1c10 | S1c11 | S1c12 | S1c13 | S1c14 | S1c15 | S1c16 |
| S1c1 | S1c2 | S1c3 | S1c4 | S1c5 | S1c6 | S1c7 | S1c8 | S1c9 | S1c10 | S1c11 | S1c12 | S1c13 | S1c14 | S1c15 | S1c16 |
| S1c1 | S1c2 | S1c3 | S1c4 | S1c5 | S1c6 | S1c7 | S1c8 | S1c9 | S1c10 | S1c11 | S1c12 | S1c13 | S1c14 | S1c15 | S1c16 |
| S1c1 | S1c2 | S1c3 | S1c4 | S1c5 | S1c6 | S1c7 | S1c8 | S1c9 | S1c10 | S1c11 | S1c12 | S1c13 | S1c14 | S1c15 | S1c16 |
| S1c1 | S1c2 | S1c3 | S1c4 | S1c5 | S1c6 | S1c7 | S1c8 | S1c9 | S1c10 | S1c11 | S1c12 | S1c13 | S1c14 | S1c15 | S1c16 |
| S1c1 | S1c2 | S1c3 | S1c4 | S1c5 | S1c6 | S1c7 | S1c8 | S1c9 | S1c10 | S1c11 | S1c12 | S1c13 | S1c14 | S1c15 | S1c16 |

| S2c1 | S2c2 | S2c3 | S2c4 | S2c5 | S2c6 | S2c7 | S2c8 | S2c9 | S2c10 | S2c11 | S2c12 | S2c13 | S2c14 | S2c15 | S2c16 |
|------|------|------|------|------|------|------|------|------|-------|-------|-------|-------|-------|-------|-------|
| S2c1 | S2c2 | S2c3 | S2c4 | S2c5 | S2c6 | S2c7 | S2c8 | S2c9 | S2c10 | S2c11 | S2c12 | S2c13 | S2c14 | S2c15 | S2c16 |
| S2c1 | S2c2 | S2c3 | S2c4 | S2c5 | S2c6 | S2c7 | S2c8 | S2c9 | S2c10 | S2c11 | S2c12 | S2c13 | S2c14 | S2c15 | S2c16 |
| S2c1 | S2c2 | S2c3 | S2c4 | S2c5 | S2c6 | S2c7 | S2c8 | S2c9 | S2c10 | S2c11 | S2c12 | S2c13 | S2c14 | S2c15 | S2c16 |
| S2c1 | S2c2 | S2c3 | S2c4 | S2c5 | S2c6 | S2c7 | S2c8 | S2c9 | S2c10 | S2c11 | S2c12 | S2c13 | S2c14 | S2c15 | S2c16 |
| S2c1 | S2c2 | S2c3 | S2c4 | S2c5 | S2c6 | S2c7 | S2c8 | S2c9 | S2c10 | S2c11 | S2c12 | S2c13 | S2c14 | S2c15 | S2c16 |
| S2c1 | S2c2 | S2c3 | S2c4 | S2c5 | S2c6 | S2c7 | S2c8 | S2c9 | S2c10 | S2c11 | S2c12 | S2c13 | S2c14 | S2c15 | S2c16 |
| S2c1 | S2c2 | S2c3 | S2c4 | S2c5 | S2c6 | S2c7 | S2c8 | S2c9 | S2c10 | S2c11 | S2c12 | S2c13 | S2c14 | S2c15 | S2c16 |

| S16c1 | S16c2 | S16c3 | S16c4 | S16c5 | S16c6 | S16c7 | S16c8 | S16c9 | S16c10 | S16c11 | S16c12 | S16c13 | S16c14 | S16c15 | S16c16 |
|-------|-------|-------|-------|-------|-------|-------|-------|-------|--------|--------|--------|--------|--------|--------|--------|
| S16c1 | S16c2 | S16c3 | S16c4 | S16c5 | S16c6 | S16c7 | S16c8 | S16c9 | S16c10 | S16c11 | S16c12 | S16c13 | S16c14 | S16c15 | S16c16 |
| S16c1 | S16c2 | S16c3 | S16c4 | S16c5 | S16c6 | S16c7 | S16c8 | S16c9 | S16c10 | S16c11 | S16c12 | S16c13 | S16c14 | S16c15 | S16c16 |
| S16c1 | S16c2 | S16c3 | S16c4 | S16c5 | S16c6 | S16c7 | S16c8 | S16c9 | S16c10 | S16c11 | S16c12 | S16c13 | S16c14 | S16c15 | S16c16 |
| S16c1 | S16c2 | S16c3 | S16c4 | S16c5 | S16c6 | S16c7 | S16c8 | S16c9 | S16c10 | S16c11 | S16c12 | S16c13 | S16c14 | S16c15 | S16c16 |
| S16c1 | S16c2 | S16c3 | S16c4 | S16c5 | S16c6 | S16c7 | S16c8 | S16c9 | S16c10 | S16c11 | S16c12 | S16c13 | S16c14 | S16c15 | S16c16 |
| S16c1 | S16c2 | S16c3 | S16c4 | S16c5 | S16c6 | S16c7 | S16c8 | S16c9 | S16c10 | S16c11 | S16c12 | S16c13 | S16c14 | S16c15 | S16c16 |
| S16c1 | S16c2 | S16c3 | S16c4 | S16c5 | S16c6 | S16c7 | S16c8 | S16c9 | S16c10 | S16c11 | S16c12 | S16c13 | S16c14 | S16c15 | S16c16 |

**FIG. 21**

Deployment of a 3-tier FCN with 32 PODs and 16 switches per POD using a stack of modules 400. The figure shows the back side of the stack. S (Spine abbreviation) and c (linecard) represent the Spine switch and linecard number, respectively.

33

# EP 4 382 981 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8621111 B
- US 20120250679 A1
- US 20140025843 A1
- WO 2019099771 A1
- US 20150295655 A
- US 11269152 B